(19) **Europäisches Patentamt**

**European Patent Office**

**Office européen des brevets**

(11) **EP 1 467 611 B1**

(12) **EUROPEAN PATENT SPECIFICATION**

(45) Date of publication and mention
of the grant of the patent:
**28.12.2005  Bulletin 2005/52**

(21) Application number: **02806549.8**

(22) Date of filing: **25.12.2002**

(51) Int Cl.⁷: **A01G 15/00**, E01H 13/00

(86) International application number:
**PCT/IL2002/001036**

(87) International publication number:
**WO 2003/061370 (31.07.2003 Gazette 2003/31)**

(54) **METHOD AND APPARATUS FOR CONTROLLING ATMOSPHERIC CONDITIONS**

VERFAHREN UND VORRICHTUNG ZUR STEUERUNG ATMOSPHÄRISCHER BEDINGUNGEN

PROCEDE ET APPAREIL POUR CONTROLER LES CONDITIONS ATMOSPHERIQUES

(84) Designated Contracting States:
**AT BE BG CH CY CZ DE DK EE ES FI FR GB GR
IE IT LI LU MC NL PT SE SI SK TR**

(30) Priority: **25.12.2001  IL  14728701**

(43) Date of publication of application:
**20.10.2004  Bulletin 2004/43**

(73) Proprietor: **YISSUM RESEARCH DEVELOPMENT
COMPANY
OF THE HEBREW UNIVERSITY OF JERUSALEM
91390 Jerusalem (IL)**

(72) Inventors:
• **KHAIN, Alexander
97795 Jerusalem (IL)**
• **FELDMAN, Yuri
97821 Jerusalem (IL)**
• **PINSKY, Mark
97350 Jerusalem (IL)**
• **ARKHIPOV, Vladimir
96705 Jerusalem (IL)**
• **RYABOV, Yaroslav
College Park, MD 20740 (US)**
• **PUZENKO, Alexander
97350 Jerusalem (IL)**

(74) Representative: **Casey, Lindsay Joseph et al
F. R. Kelly & Co.
27 Clyde Road
Ballsbridge
Dublin 4 (IE)**

(56) References cited:
**US-A- 1 928 963          US-A- 3 600 653
US-A- 4 475 927          US-A- 5 357 865**

**Description**

**FIELD OF THE INVENTION**

This invention relates to a method and apparatus for weather control and modification, and in particular, for controlling atmospheric conditions by seeding dispersing materials in the atmosphere causing the precipitation of water therein.

**BACKGROUND OF THE INVENTION**

Various techniques are known in the art for treating atmospheric conditions to precipitate atmospheric water. Such techniques are utilized for the regulation and enhancement of rain, prevention and suppression of hail, dispersal of ground mist and abatement of fog. In particular, the regulation and enhancement of rain is especially important in countries that experience water shortage for agriculture and other human activities, for example, while the modifying of unfavorable weather by precipitation of fog or mist is crucial for increasing visibility, for example, on roads and runways of airports.

It is known that typically water droplets in clouds and fogs are relatively small. Magnitudes of the radii of majority of the droplets in clouds and fogs are distributed in the ranges of 1-10 microns and 1-5 microns, respectively. However, in order to trigger raindrop formation, the droplet radius should exceed 20-25 microns (see, for example, Khain *et al,* "Notes on the state-of-the-art numerical modeling of cloud microphysics". *Atmos. Res.,* 2000, v. 55, p. 159-224). Droplets having a radius of 1 to 25 microns will be referred to hereafter as microscopic droplets, and droplets having a radius exceeding 25 microns will be referred to hereinafter as drops. All references to the size of drops or droplets refer to their radius.

Water droplets with a radius of higher than 25 microns have sufficient mass to attain a fall velocity under the force of gravity sufficient to collect smaller droplets and precipitate from clouds or fog owing to their collisions and coalescence. On the other hand, the gravity-induced approach of small droplets does not usually lead to their coalescence, because most of the small droplets move around their counterparts together with the airflow.

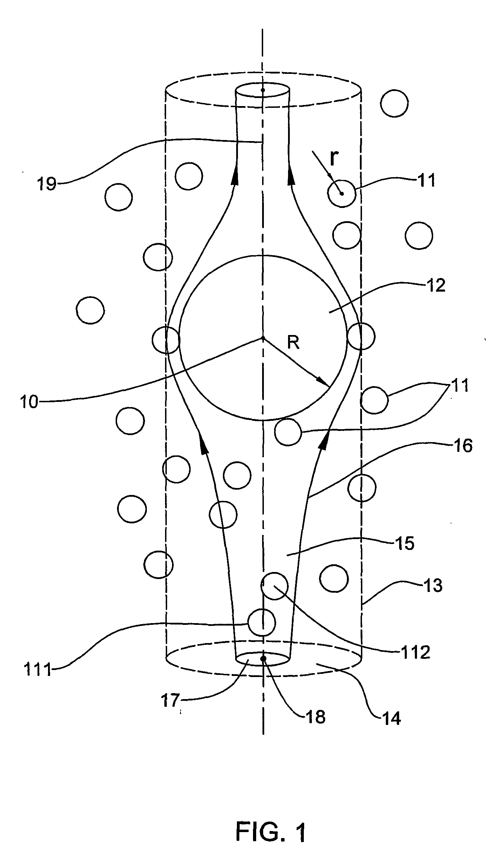

**Fig. 1** illustrates a scheme of collisions of small droplets **11** having a radius of $r$ with a large drop **12** (also known as a "drop-collector") having a radius of $R$. The drop **12** moving under the force of gravity may collect the small droplets locating within a cylinder **13**. A volume of the cylinder **13** over a unit of time reads:

$$V = \pi(R+r)^2[V_R - V_r], \qquad (1)$$

wherein $\pi(R+r)^2$ is the area of a geometric cross-section **14;** and $V_r$ and $V_R$ are the velocities of the droplets **11** and the drop-collector **12,** respectively.

A collision rate $N$ (the number of collisions per a unit of time) may be expressed as a product of the volume of the cylinder **13** and the concentration $C$ of the droplets **11,** to wit:

$$N = V\,C \qquad (2)$$

However, the number of collisions in clouds and fogs is, in fact, much smaller than that determined by Eq. (2), because most of the small droplets move around the drop-collector **12** together with the airflow without collisions. Collisions between the droplets are possible only due to droplet inertia that leads to a deviation of the collected droplets from streamlines **16** of the airflow. Since the inertia of small droplets is small, most of the droplets move around the drop-collector **12,** avoiding collisions. Thus, only the droplets located in a swept volume **15** (that is a rather small fraction of the volume of the cylinder **13**) experiences collisions. This fraction is referred to as a *collision efficiency* that can be defined as the ratio between an area $S$ of the collision cross-section **17** and the area of the geometrical cross-section **14,** to wit:

$$E = S/\pi(R+r)^2 \qquad (3)$$

As a result, an effective collision rate $N_{eff}$ can be determined according to the following equation:

$$N_{eff} = EVC \tag{4}$$

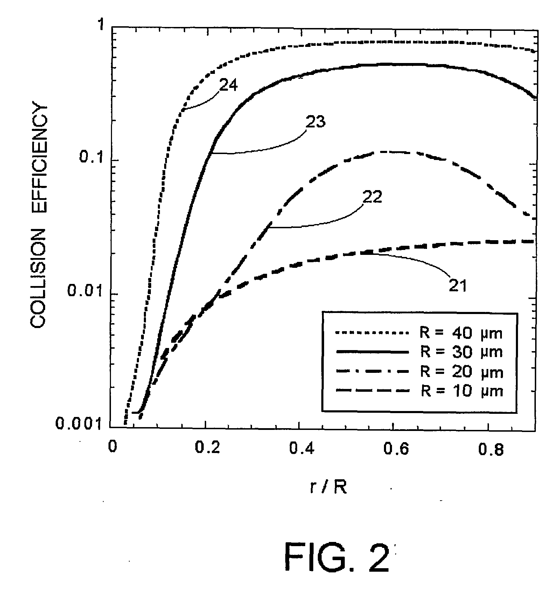

**Fig. 2** shows a dependence of the collision efficiency $E$ on the ratio $r/R$ plotted for various radii $R$ of the drop-collector (**12** in **Fig. 1**). It can be appreciated that when the drop collectors have a small radius, i.e. around 10 microns (curve **21**), the value of the collision efficiency is very small (ranging from $10^{-4}$ to $10^{-2}$). In other words, the small droplets, in fact, do not collide over a reasonable period of time.

On the other hand, when the drop-collectors reach a radius exceeding about 20 microns, the collision efficiency $E$ has a value sufficient to produce collisions, i.e. larger than 0.1 (curves **22-24**). This drop-collector size is usually thought of as the minimum drop size necessary for triggering a process of collisions and creating the raindrops, i.e., drops larger than about 50 microns in radius.

Therefore, if a cloud does not have a sufficient number of large drop-collectors, it cannot realize fully its precipitation potential. Such a situation in clouds is quite usual, because the time necessary to form large drops in natural conditions often exceeds the time period of the cloud's development.

Various techniques have been used to date to generate drop-collectors having a size sufficient for the coalescence of cloud and fog droplets. One of the methods of treatment of atmospheric conditions for this purpose is the *glaciogenic seeding* technique, i.e. artificially creating ice freezing nuclei and generating ice crystals in supercooled clouds and fogs. The ice crystals may grow faster than the water droplets owing to condensation of the atmospheric water vapor, since a supersaturation with respect to ice is higher than that with respect to liquid water. As a result of this grows, the large ice crystals (or water drop-collectors on such crystals) dispersed in the air may attain the sizes sufficient to collect other cloud droplets to trigger precipitation.

Glaciogenic seeding may be accomplished, for example, by vaporizing silver iodide at a high temperature and causing it to recrystallize, or by spraying into the atmosphere a solution of silver iodide in ammonia, or by burning a solution of silver iodide in acetone. Various methods of generating fine particles and multicomponent aerosols on the basis of glaciogenic seeding techniques for the precipitation of atmospheric water are disclosed, for example, in U.S. Pat. No. 3,429,507 to Jones; U.S. Pat. No. 3,613,992 to Knollenberg; U.S. Pat. No. 3,788,543 to Amand *et al;* U. S. Pat. No. 4,096005 to Slusher; U.S. Pat. No. 5,174,498 to Popovitz-Ronit *et al;* U.S. Pat. No. 5,360,162 to Mentus, and U.S. Pat. No. 6,056,203 to Fukuta.

One of the main drawbacks of the prior art glaciogenic seeding methods is their limited operability, since they may be utilized only when cloud or fog water droplets are below the freezing point of water (around 0 °C).

Various techniques for promoting the precipitation of cloud and fog droplets at temperatures above the freezing point of water are also known in the art. These techniques are based on dispersing the particles having the property of absorbing the water from clouds and fog, thereby creating large droplet-collectors.

One such technique for triggering raindrop formation through the acceleration of large droplets formation is the *hygroscopic seeding* technique. This technique is widely utilized for rain enhancement and fog dispersal (see, for example, G.B. Pat. No 1,110,768; U.S. Pat. No. 3,378,201 to Glew *et al;* U.S. Pat. No. 3,608,810 to Kooser; U.S. Pat. No. 3,608,820 to Kooser; U.S. Pat. No. 3,659,785 to Nelson; U.S. Pat. No. 3,802,624 to Kuhne; U.S. Pat. No. 3,896,993 to Serpolay; U.S. Pat. No. 3,940,059 to Clark; U.S. Pat. No. 4,362,271 to Montmory; U.S. Pat. No. 4,653,690 to St. Amand *et al.;* and U.S. Pat. No. 5,357,865 to Mather).

The prior art hygroscopic seeding techniques suffer from numerous drawbacks. For example, when granular materials are used as seed agents, their hygroscopic nature often causes agglomeration and caking in storage, even in the presence of low moisture content. These negative phenomena lead to the creation of particles of sizes which are usually much greater than the desired value, that is, e.g., about 1 to 10 microns in radius. Notwithstanding that huge hygroscopic particles could be appropriate for the creation of large drop-collectors, such particles are rather heavy for transportation by airplanes to provide the desirable concentration of such particles into clouds. Thus, the utilization of such materials turns out to be inefficient.

Another example of hygroscopic materials widely used for cloud seeding is particles obtained by burning (flares). However, these materials contain mainly small particles (less than 1 micron in radius), leading to the growth of small droplets, which are ineffective for precipitation. In other words, the fraction of the large particles (effective for the purpose of creating drop-collectors) in the flares is remarkably lower than that of the small particles. Since the effects of the small and large particles on the drop growth are opposite, the total effect of the seeding is not clear (see, for example, R.T. Bruintjes, "*A review of cloud seeding experiments to enhance precipitation and some new prospects*", *Bull. Amer. Met. Soc.,* 1999, V. 80, P. 805-819).

Also known in the art are *electrostatic precipitation* techniques employing an electrical field to force liquid particles in the fog together to form large drops of sufficient mass to precipitate. U.S. Pat. No. 1,928,963 to Chaffee describes a technique for dissolving clouds and fogs and producing rain by scattering charged particles in the atmosphere. More specifically, it was assumed that when the charges of the moisture particles (i.e., cloud/fog droplets) are all of the same sign, whether positive or negative, these particles are kept apart by repulsion for an indefinite period, until atmospheric disturbances bring about a change in electrical conditions. Thus, it was proposed to seed clouds and fogs by charged particles with a sign opposite to that of the moisture particles to induce collisions between the scattered particles and moisture particles of cloud and fog.

It is relevant to note that besides the pioneering idea of utilizing charged particles for seeding clouds and fog, U.S. Pat. No. 1,928,963 does not provide any practical solution for controlling atmospheric conditions, owing to the fact that at the time when U.S. Pat. No. 1,928,963 was filed and prosecuted (1925-1933) there was no correct scientific understanding of the physical processes occurring in clouds and fog. In particular, U.S. Pat. No. 1,928,963 mistakenly assumes that water droplets always repel when the charges of the droplets are all of the same sign. Likewise, U.S. Pat. No. 1,928,963 underestimates the interaction between neutral and electrically charged droplets, which is very important, since the majority of water droplets is usually neutral in natural clouds and fog. Therefore, the proposal of U.S. Pat. No. 1,928,963 first to charge the neutral cloud or fog with electricity of one polarity by treating the cloud or fog by scattering particles having a charge of one sign, and then treat it with particles of the opposite polarity, is not practical.

Moreover, U.S. Pat. No. 1,928,963 also mistakenly assumes that one charged seeding particle can condense around it 30,000-40,000 moisture particles (droplets), with rapid consequent precipitation. Contrary to this assumption, a modern estimation can show that one seeding particle cloud and/or fog cannot collect such a big number of droplets, because (i) the Coulomb force decays rapidly with the distance between the particle centers; and (ii) the magnitude of the collector charge decreases, due to collisions with oppositely charged moisture particles.

Likewise, U.S. Pat. No. 1,928,963 does not teach to use the basic characteristics of atmospheric conditions, such as concentration, mass and size distribution of the moisture and seeding particles for providing control of the collisions required for droplet precipitation. Therefore, U.S. Pat. No. 1,928,963 cannot provide reliable instructions for the error-free control of atmospheric conditions.

It is established that cloud and/or fog droplets can be charged by different mechanisms, such as ion-diffusion, convection charging, inductive charging, thermo-electric effect, contact potential effect etc. (see, for example, Pruppacher and Klett, *"Microphysics of Clouds and Precipitation."* Kluwer Academic Publishers, Dordrecht/Boston/London, 1997, pp. 811-827):

U.S. Pat. No. 3,600,653 to Hall describes a method for reducing fog density by passing the fog between a pair of electrodes. However, this method may be utilized only with equipment emitting artificial fog, since the installation of electrodes above a runway for water precipitation in natural fogs would be highly impractical.

U.S. Pat. No. 4,475,927 to Loos describes a technique for the abatement of fog in a space over an aircraft approach zone and runway. According to this technique, charged droplets of both polarities are introduced in the space by air jets. These positively charged droplets having sufficiently low mobility in order to stay long enough are blown aloft to form a virtual electrode suspended at an appropriate height above the ground. The negatively charged droplets (collector drops) are given high enough mobility for collecting of fog drops in an upward motion in the electric field created between the spaced-apart positively and negatively charged droplets.

U.S. Pat. No. 4,671,805 to Gourdine describes an EGD (electro-gas-dynamic) system deployed in an array and used for the precipitation of fog over airports. The patent discloses a technique for producing a cloud of sub-micron size charged water droplets that are sprayed into the atmosphere for creating a space-charge cloud above a runway extending to a height of a few tens of meters. The cloud has a maximum electric field strength at the ground, and a zero field strength at the top of the cloud. The charged water droplets, in their earthward motion under the electric force, attach themselves to any other particles that may be suspended in the space-charge cloud. Precipitation occurs also as wind transports the spaced-charge cloud.

It should also be mentioned that U.S. Pat. No. 4,671,805 observes that seeding fog with electrically charged particles from an airplane was contemplated but discarded in favor a ground-based system owing to the many operational difficulties of an airborne system. The patent does not expand on the nature of these operational difficulties, but in any event, is restricted to a discussion of ground based systems for fog precipitation principally for dispersing fogs near airports and the like. Moreover, no suggestion is made as to how this can be achieved controllably.

One of the main drawbacks of the electrostatic precipitation prior art techniques is their inefficiency, since these techniques require high energy consumption for producing an electromagnetic field over a large space or territory. Therefore, these techniques cannot be utilized over large areas of fog and clouds.

U.S. Pat. No. 4,684,063 to Goudy, Jr. describes a mixer/charger apparatus for a variety of purposes employed simultaneously to mix and to electrically charge a fluid flowing therethrough. In one version, the mixer/charger apparatus includes a liquid supply from which the charged mist ultimately is produced for seeding clouds. In an alternate version, the apparatus employs an air input supply that is delivered to a mixer/charger that produces a charged air output used to effect seeding function.

The techniques mentioned above are addressed to seeding clouds and fog for rain enhancement and/or fog abatement. However, as mentioned above, uncontrolled seeding may result in phenomena that are opposite from what the users expected. For example, the utilization of many conventional glaciogenic and hygroscopic techniques may result in the production of small droplets that are ineffective for rain formation.

Thus, despite the extensive prior art in the area of treating atmospheric conditions by seeding various materials, there is still a need for further improvements for controlling the precipitation of atmospheric water.

## SUMMARY OF THE INVENTION

The present invention satisfies the aforementioned need by providing a novel method of controlling atmospheric conditions in a portion of the atmosphere according to claim 1.

The changes of the non-gravitational attraction forces between the droplets are achieved by dosed seeding in a portion of a cloud or fog a seeding material that is electrically charged to a required magnitude and polarity.

According to one embodiment of the invention, the seeding material contains fine particles of a particulate material.

According to another embodiment of the invention, the seeding material contains seeding water droplets which are collected from the cloud or fog, and then electrically charged to a predetermined magnitude and polarity.

According to yet embodiment of the invention, the seeding material contains particles of a particulate material together with seeding water droplets. The ratio between a concentration of the particles and the concentration of the water droplets has a predetermined value.

The dosed seeding of the charged seeding materials (charged particles and/or water droplets) can control the concentration of the charged droplets in the cloud or fog, the electric attraction between the charged droplets with neutral droplets as well as the electric interaction between the charged droplets.

The droplets in natural clouds and fogs are usually electrically neutral and represent weak salt solutions. The charged seeding material utilized for seeding may be obtained, for example, by passing a particulate material and/or water droplets through an electric discharge (e.g., a corona discharge).

When an element of the charged seeding materials (hereinafter also referred to as a charged seeding element) approaches an electrically neutral droplet at a distance sufficient for electrical interaction, a charge with a polarity opposite to the charge of the element is induced on the side of the droplet facing the element. The induced charge causes an electrical attraction between the element and droplet, i.e. a non-gravitational attraction. This attraction results in a close approach and capture of the element by the droplet. The droplet that received the charge from the element can, in its turn, attract another electrically neutral droplet with a consequent approach and coalescence that would not be possible in the case of a pure gravity-induced attraction. The attractions increase the collision efficiency between the droplets and the rate of their collisions, which in turn fosters the formation of large droplets leading to raindrops in clouds. In case of fog, it leads to the elimination of small droplets owing to their collisions and coalescence that results in fog dissipation.

The foregoing need is also accomplished by providing an apparatus according to claim 17 for controlling atmospheric conditions in a portion of the atmosphere containing microscopic water droplets. The apparatus includes a chamber for providing a element flow stream of uncharged seeding elements, a charger coupled to the chamber for charging the elements in the element flow stream, a seeder for controllably scattering the charged seeding elements in the atmosphere and a control module for controlling the operation of the apparatus.

According to one embodiment of the invention, the chamber of the apparatus includes a feeder for allowing the introduction of raw material into the chamber, a mixer for mixing an air flow stream with a particulate material derived from the raw material and an outlet for releasing an output obtained thereby to the charger. The air flow stream can, for example, be provided by a fan coupled to the chamber.

According to another embodiment, the air flow stream is provided by an inlet arranged in the chamber. The inlet is fitted for receiving an input air flow stream containing atmospheric water droplets and transferring this stream to the chamber thereby providing the air flow stream containing atmospheric water droplets. When required, a suction device can be arranged in the inlet for the facilitation of the receiving of the input air flow stream from the atmosphere.

In order to control the operation of the apparatus, the control module of the apparatus is equipped with conventional devices for indicating and controlling certain parameters such as the amount and kind of raw material to be used, the strain of the air in the air flow stream, the strain of the element flow stream, the strain of the charged element flow stream, the size, charge and concentration of the seeding elements in the element flow stream, etc.

Accordingly, the control module of the apparatus can include a first strain regulator arranged in the inlet for producing a first sensor signal representative of the strain of the air in the air flow stream. The control module is responsive to the first sensor signal for controlling the strain. The control module can also include a second strain regulator arranged in the outlet for producing a second sensor signal representative of the strain of the element flow stream. The control module is responsive to the second sensor signal for controlling the strain. Further, the module can also include a third strain regulator arranged in the seeder for producing a third sensor signal representative of the strain of the charged element flow stream. The control module is responsive to the third sensor signal for controlling the strain.

The control module can include a charge regulator arranged in the charger and is responsive to a signal produced thereby for controlling the charge magnitude and/or polarity of the charged particles.

The apparatus receives electric power from an electrical power source and can also include a burner coupled to the chamber for burning the raw material so as to form the particulate material as a combustion product. In such a case, the control module preferably includes a temperature regulator arranged in the chamber. The temperature regulator is responsive to a signal produced thereby for controlling the temperature in the burner.

The technique of the present invention for controlling the atmospheric conditions has many of the advantages of the aforementioned prior art techniques, while simultaneously overcoming some of the disadvantages normally associated therewith.

Despite the large variety of the prior art techniques dealing with seeding clouds and fog with glaciogenic and hygroscopic materials and also with charged droplets, none of the techniques addresses the controllable seeding of charged particulate materials.

As far as the conventional glaciogenic and hygroscopic seeding techniques are concerned, it is relevant to note that the method of the present invention can provide a significantly higher collision efficiency than the conventional methods used for seeding particulate materials, which lack the step of charging the particles.

Since the electric force is usually larger than the force of hydrodynamic attraction of droplets due to gravity, the charging of particulate seed materials can even provide collisions and precipitation of small droplets, having sizes of 1-10 microns in radius, that is impossible in the glaciogenic and hygroscopic seeding techniques. Thus, in contrast to these techniques, not only particles having a size higher than 1 micron can serve as a seed agent, but even rather small particles of about 0.1 to 1 micron do so. In this case, the competing effects of small and large particles, that crucially decrease the efficiency of the prior art methods of glaciogenic and hygroscopic seeding, are eliminated, and both small and large charged particles can accelerate the process of large drop formation.

Additionally, according to one embodiment, the raw particulate material utilized for producing charged particles can be selected from a very broad type of conventional materials. Therefore, many inexpensive and easily produced materials (e.g., soot) may be utilized.

Thus, according to one broad aspect of the present invention, there is provided a method of controlling atmospheric conditions in a portion of the atmosphere containing microscopic water droplets according to claim 1.

According to another broad aspect of the present invention, there is provided an apparatus for controlling atmospheric conditions in a portion of the atmosphere containing microscopic water droplets dispersed therein, the apparatus comprising:

a chamber for providing an element flow stream containing uncharged seeding elements having a predetermined size;

a charger downstream of the chamber and in communication therewith for charging said uncharged seeding elements in said element flow stream so as to produce charged seeding elements having a predetermined polarity and charge magnitude;

a seeder for controllable scattering said charged seeding elements in said portion of the atmosphere;

a control module for controlling operation of the apparatus; and

an electrical power source for providing electrical power required for operation of the apparatus.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

**Fig.1** illustrates a scheme of collisions of small droplets with a large drop (a drop-collector);

**Fig. 2** illustrates an example of the dependence of the collision efficiency on the ratio between the small uncharged droplet and the uncharged drop-collector of **Fig. 1,** shown for various radii of the drop-collector;

**Fig. 3** illustrates an example of the dependence of an electric attraction force between a typical droplet and a typical charged particle on the distance therebetween;

**Fig. 4** illustrates three examples of the dependence of the collision efficiency on the droplet charge for cloud;

**Fig. 5** illustrates two examples of the dependence of the collision efficiency on the droplet charge for fog;

**Fig. 6A** is a schematic block diagram of an apparatus according to one embodiment of the present invention;

**Fig. 6B** is a schematic block diagram of an apparatus according to another embodiment of the present invention;

Fig. 7 illustrates two examples of the time dependence of visibility in fog seeded by charged seeding elements; and

Fig. 8 illustrates four examples of the time dependence of the relative rainwater content in a cloud seeded by charged elements.

## DETAILED DESCRIPTION OF SPECIFIC EMBODIMENTS

The principles and operation of a method and an apparatus according to the present invention may be better understood with reference to the drawings and the accompanying description, it being understood that these drawings are given for illustrative purposes only and are not meant to be limiting.

The present invention provides a novel method and apparatus for controlling atmospheric conditions in a portion of the atmosphere for weather modification. The portion of the atmosphere may, for example, be a portion of a cloud or fog containing water droplets having different sizes dispersed therein.

The control of atmospheric conditions is carried out by controllably urging the collisions between the water droplets in the atmosphere so as to cause their controllable coalescence. The urging is characterized by adjusting non-gravitational attraction forces between the droplets to a predetermined value so as to alter a collision rate between the water droplets to a desired value.

The collision rate is proportional to the collision efficiency and to the droplet concentration according to Eq. (4). Therefore, altering the non-gravitational attraction forces between the droplets can result in altering the effective collision rate, thereby causing the enhancement or reduction of coalescence and precipitation of the droplets in their motion under the force of gravity.

The changes of the non-gravitational attraction forces between the droplets are achieved by dosed seeding in a portion of a cloud or fog of a seeding material that is electrically charged to a required magnitude and polarity.

According to one embodiment of the invention, the seeding material contains fine particles of a particulate material.

According to another embodiment of the invention, the seeding material contains seeding water droplets which are collected from the cloud or fog, and then electrically charged to a predetermined magnitude and polarity.

According to yet embodiment of the invention, the seeding material contains particles of a particulate material together with seeding water droplets. The ratio between a concentration of the particles and the concentration of the water droplets has a predetermined value.

The charged seeding material utilized for seeding contains charged seeding elements, such as charged fine particles and/or water droplets. The charged seeding material can be obtained, for example, by passing an uncharged seeding material through an electric discharge (e.g., a corona discharge). The dosed seeding of the charged materials controls the concentration of the charged droplets and the electric attraction between the charged droplets with neutral droplets as well as the electrical interaction between the charged droplets.

The droplets in natural clouds and fogs are usually electrically neutral and represent weak salt solutions. Upon the approach of a charged element (particle and/or water droplet) of the charged seeding material to an electrically neutral droplet at a distance sufficient for electrical interaction, a charge with a polarity opposite to the charge of the element is induced on the side of the droplet that is facing the particle. This induced charge causes a non-gravitational attraction, such as an electrical attraction between the element and droplet. The magnitude of the attraction force in air can, for example, be derived from the following equation (see, for example, B.I. Bleaney and B. Bleaney, Electricity and Magnetism, Oxford University Press, Third Edition, 1976, v. 1, p. 58):

$$F = \frac{q^2}{4\pi\varepsilon_0} \left[ \frac{Ra}{\left(a^2 - R^2\right)^2} - \frac{R}{a^3} \right] \qquad (a > R) , \qquad\qquad (5)$$

where $R$ is the radius of the neutral droplet, $a$ is the distance between the centers of the charged element and the droplet, $q$ is the element charge and $\varepsilon_0 = 8.854 \cdot 10^{-12}$ F/m is the universal dielectric constant.

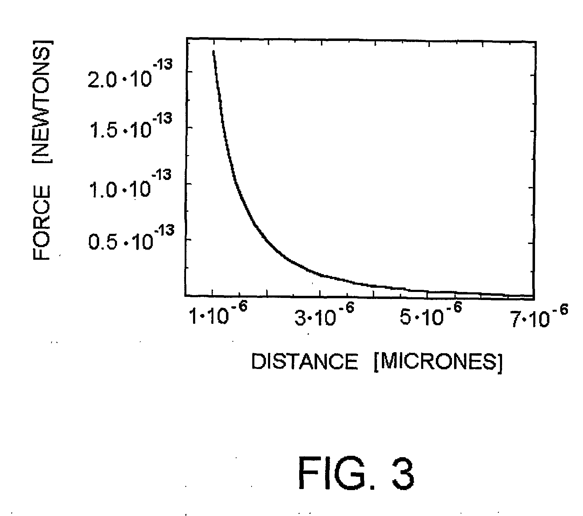

**Fig. 3** illustrates the dependence of the electric attraction force between a droplet and a charged element (calculated by using Eq. (5)) on the distance between the droplet and element. For this example, magnitudes of the element charge and the droplet radius were set to $q = 10^{-17}$ Coulomb and $R = 10$ microns, respectively.

This attraction results in a close approach and capture of the charged element by the droplet. The droplet that received the charge from the charged element can, in its turn, attract another electrically neutral droplet with consequent approach and coalescence that would not be possible in the case of pure gravity-induced attraction. These attractions increase the collision efficiency between the droplets and the rate of their collisions, which in turn foster the formation of large droplets leading to raindrops in clouds. In case of fog, it leads to the elimination of small droplets due to their collisions and coalescence that results in fog dissipation.

In order to understand the manner in which the collision efficiency between the droplets depends on the sizes and electrical charges of the element (or droplets) and to see how the collision efficiency can be altered to a desired value in practice by varying these parameters, several non-limiting examples of computer simulations are described hereinafter in details.

In general, for the purpose of the invention, the elements utilized for seeding may have a spread of sizes ranging from sub-micron to several microns size, e.g., between 0.1 and 20 microns. The charge may have negative or positive polarity, and maximum magnitude of such charged elements may, e.g., range from about $\pm 10^{-16}$ Coulomb to about $\pm 10^{-12}$ Coulomb.

The collision efficiency can be calculated by utilizing Eq. (3). Turning to **Fig. 1,** an example of the case of axisymmetric geometry of the collisions is illustrated. In this example, the collision cross section **17** is a circle having a center 18 located on a vertical axis **19** passing through a center **10** of the large drop **12.**

A calculation of a radius of the collision cross section **17** can be carried out by numerical simulation experiments of the approach of the small droplets **11** to the large drop **12.** For the purpose of the numerical experiments, various state-of the-art mathematical models can be used for a hydrodynamic description of the droplet motions. For example, a known *per se* superposition method can be considered, according to which each droplet is assumed to move under the gravitational, electric, buoyancy and drag forces in the flow induced by its counterpart moving alone. This method is described in the following publications:

M. Pinsky, A. Khain, and M. Shapiro, *"Collisions of small drops in a turbulent flow. Pt.1 : Collision efficiency: problem formulation and preliminary results," J. Atmos. Sci.,* 1999, v. 56, p. 2585-2600; and

M. Pinsky, A. Khain, and M. Shapiro, *"Collision efficiencies of drops in a wide range of Reynolds numbers: Effects of pressure, " J. Atmos. Sci.,* 2001, v. 58, p. 742-764.

At the beginning of the simulation, a mutual motion of the large drop **12** relative to one small droplet (e.g., a droplet **111** in **Fig. 1**) that is selected from the droplets **11** can be carried out. The small droplet **111** is selected subject to the condition that it is located on the axis **19** below the large drop **12** at a distance of larger than 30$R$ (i.e., 30 radii of the large drop) from the large drop **12.** The distance is selected subject to the condition that at the start of the simulation, the electric and hydrodynamic interactions between the drop **12** and the droplet **111** should be insignificant. During motion under gravity, the large droplet moves faster than the small droplet owing to the counteracting electrical, buoyancy and drag forces and attains the distance at which the interactions start to affect the droplet relative motion that results in their collision.

In the next step of the simulation experiment, a hydrodynamic motion of another selected small droplet (for example a droplet **112**) relative to the large drop **12** can be considered. The droplet **112** can also be placed at the distance of 30$R$ from the large drop **12.** However, the initial distance of small droplet **112** from the vertical axis **19** should be successively increased.

Thereafter, the simulation experiment can be continued with a consequent increase of the initial distance of the small droplet from the vertical axis **19.** In each of these simulations, trajectories of the approach of the small droplets to the drop collector and variations in time of the distances between the small droplets and the large drop can be calculated.

It should be appreciated that the collisions between the small droplets and the large drop may take place only when the initial deviations of the small droplets from the vertical axis are relatively small. On the other hand, when the initial deviations start to exceed a certain value, the small droplets will move around the large droplet together with the airflow without collisions. This distance (deviation) separating a zone of collisions from the non-collision zone can be defined as a radius of the collision cross-section **17.**

For example, the large drop **12** can be considered to be electrically neutral and the small droplets **11** to be electrically charged. In this case, in order to adjust the collision efficiency to a desired value the simulations can be run for various sizes of the large drop as well as various sizes and charge of the small droplets.

It should be understood that a collision efficiency between the droplets and particles, when necessary, can be calculated in the same manner as the collision efficiency between the drops and droplets.

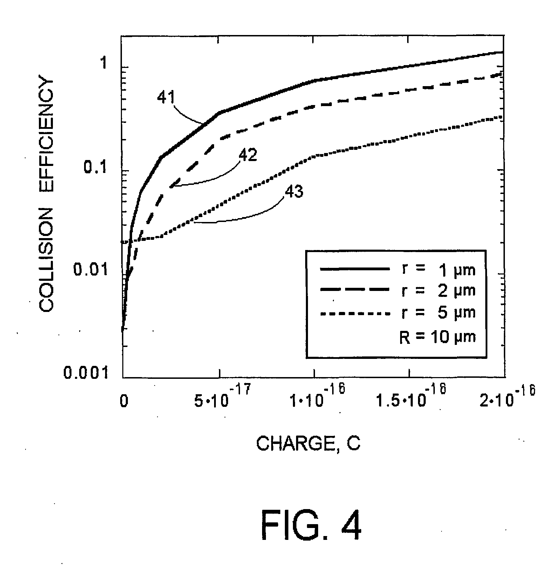

Referring now to **Fig. 4,** three examples of calculations of the collision efficiency between the drop-collector and droplets (particles) as a function of the droplet (particle) charge are illustrated. In these examples, the size of the drop-collector is 10 microns in radius and the sizes of the small droplets (particles) are 1 micron (curve **41**), 2 microns (curve **42**) and 5 microns (curve **43**), respectively. This situation of the droplet sizes is typical for cumulus clouds. However, it should be noted that if a droplet radius in fog have a magnitude of up to 10 microns, then **Fig. 4** serves also as illustration for the fog conditions.

It can be seen that in the absence of electrical attraction between the droplets (i.e., when the drop and droplets are not charged), the collision efficiency has a magnitude of about 0.003, 0.01 and 0.02 for the droplets having the size of 1 micron, 2 microns and 5 microns, respectively. This means that the drop and droplets, in fact, do not collide over a reasonable period of time.

However, the situation changes when the droplets are charged. In this case, the collision efficiency between the drop-collector and the 5 micron droplet increases by about 10 times, when the droplet receives a charge having a value of about 2·10⁻¹⁶ Coulomb (see curve **43**).

The collision efficiency increases even more drastically for the droplets having radii of 1 micron and 2 microns. Thus, the collision efficiency increases by about two orders of magnitude for the droplets having a radius of 2 microns (see curve **43**) and by about three orders of magnitude for the droplets having a radius of 1 micron (see curve **43**).

It can be noted that the magnitude of the collision efficiency for certain situations can exceed 1 (see curve **41**). In other words, the collision cross section (**17** in Fig. 1) is larger than the geometrical cross-section (**14** in **Fig. 1**), meaning that even the droplets located outside the volume of the cylinder (**13** in **Fig. 1**) participate in the collisions. In general, by utilizing the technique of the invention, the collision efficiency may be varied in a rather broad range, for example, from 0.001 to 100.

It should be appreciated that in contrast to the teaching of the prior art, the computer experiment shows that collision efficiency for the smaller droplets (particles) is higher than the collision efficiency for the larger droplets (particles). This unexpected result provides an advantage of the method of the present invention that was unappreciated hitherto. As was mentioned above, one of the major requirements of the prior art techniques was producing large seed particles, since the small particles are not effective for creating large drop-collectors. In particular, the techniques based on seeding combustion products obtained by burning are not sufficiently effective since the combustion product contain mainly small particles. Thus, the main drawback of the prior art technique that militates against the use of small seed particles is overcome by the invention and actually used to advantage.

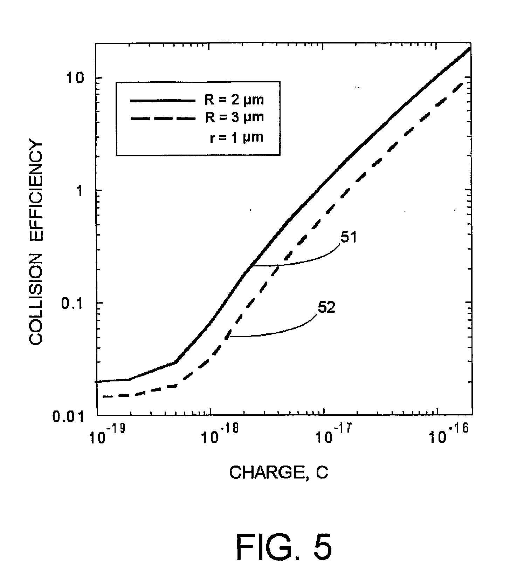

**Fig. 5** illustrates examples of calculations of the collision efficiency for a situation relevant to fogs containing relatively small droplet (1-3 microns). The collision efficiency is calculated as a function of the droplet (particle) charge for the drop-collectors having radius of 2 microns (see curve **51**) and 3 microns (see curve **52**) interacting with the small droplets (particles) having the radius of 1 micron. In the case when the droplets are uncharged the collision efficiency is about 10⁻². However, the collision efficiency between the neutral and charged droplets increases by 2 to 3 orders of magnitude, depending on the charge value.

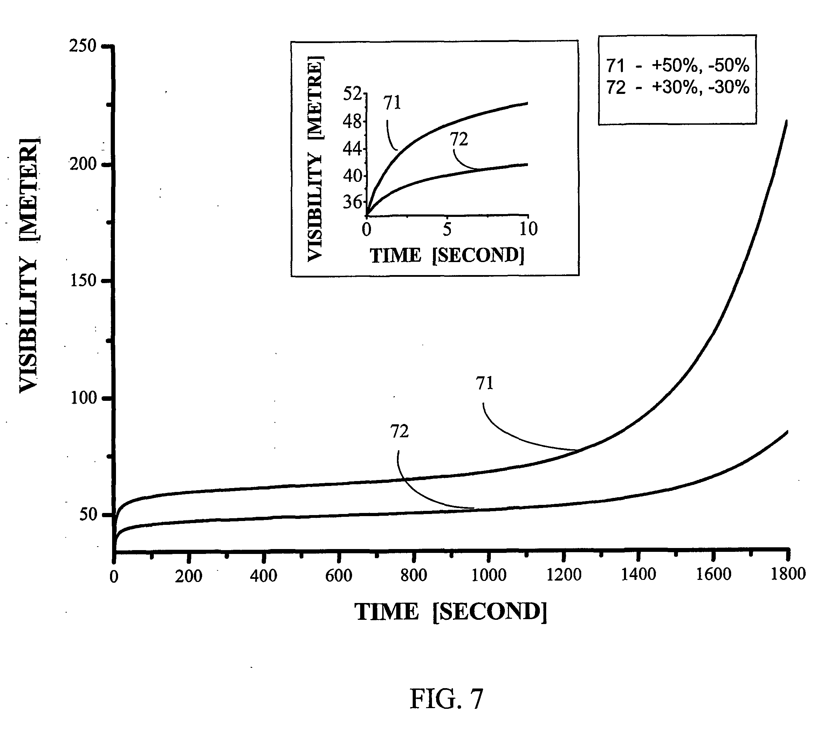

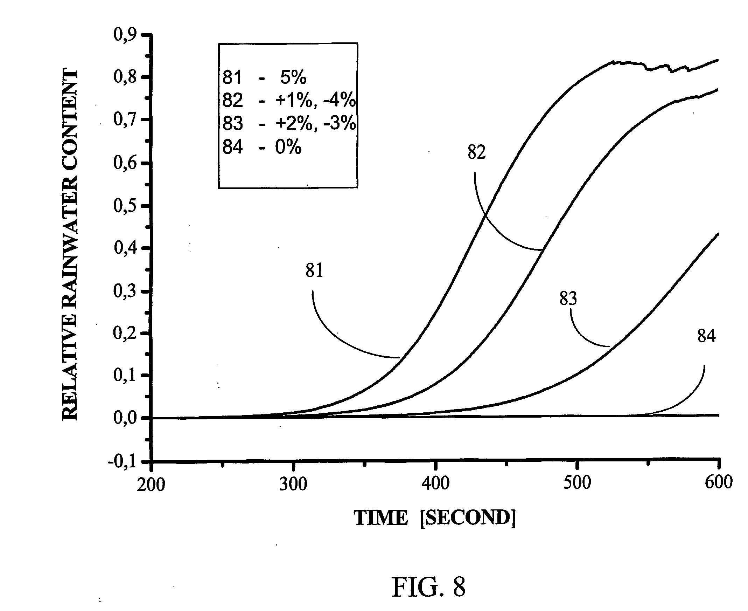

Referring now to **Fig. 7** and **Fig. 8**, the results of computer calculations of the efficiency of the proposed method in controlling atmospheric conditions is illustrated.

The measure of the efficiency of the fog abatement techniques can be characterized by improvement of visibility in fog after the injection of seeding elements. The visibility (VIS) is related to the extinction coefficient β by the known equation:

$$VIS = \frac{\ln\varepsilon}{\beta} \tag{6}$$

where ε is the contrast threshold, usually equal to 0.02 (see, for example, B. A. Kunkel, *"Parameterization of droplet terminal velocity and extinction coefficient in fog models"*, Journal of Climate and Applied Meteorology, 1984, v. 23, p. 34-41). The extinction coefficient β characterizes the rate of the weakening of light beam energy in fog. It is known (see, for example, Zuev V.E. "Propagation of visible and infrared radiation in the atmosphere", Israel Program for Scientific Translations Ltd, Halsted Press, New York-Toronto-Jerusalem-London, 1974, p. 230), that the extinction coefficient β depends on the droplet size distribution in fog, and can be calculated by using the following equations:

$$\beta = N \int_0^\infty \pi a^2 K(\rho) f(a) da, \tag{7}$$

where

$$K(\rho) = 2 - \frac{8n^2 \sin[2\rho(n\text{-}1)]}{\rho(n\text{+}1)^2(n\text{-}1)}, \quad \text{and} \quad \rho = \frac{2\pi a}{\lambda}, \tag{8}$$

In Eqs. (7) and (8), N is the droplet concentration, *a* is the droplet radius, *f(a)* is the droplet size distribution function in fog (or in a cloud), n = 1.33 is the refractive index of water and λ is the wavelength of the scattered radiation. In the present calculations, the wavelength λ=*500* nanometers have been selected, that corresponds to the center of the visible range of the light spectrum.

In order to calculate a time dependence of visibility in fog, the time evolution of the droplet size distribution caused by the droplet collisions must be determined. It is known in the art that the evolution of the droplet spectrum with time can be obtained by solving the stochastic collection equation (see, for example, A. Bott, *"A flux method for the numerical solution of the stochastic collection equation ", J. Atmos. Sci.,* 1998, v. 55, p. 2284-2293; and A.P. Khain, M. Ovtchinnikov, M. Pinsky, A. Pokrovsky, and H. Krugliak, *"Notes on the state-of-the-art numerical modeling of cloud microphysics ", Atmos. Res.* 2000, v.55,p. 159-224).

It can be appreciated that, according to the stochastic collection equation, the production of large droplets is accelerated when the effective collision rate $N_{eff}$ increases.

The aforementioned calculation technique described by Bott has been utilized for solving the stochastic collection equation, and thereby calculation of the time evolution of the initial droplet spectrum. The effect of the charge of the seeding elements on the collision efficiency, illustrated in **Fig. 4** and **Fig. 5,** has been taken into account in the calculations.

Fig. 7 illustrates two examples of calculations of the time dependence of visibility in fog. In the calculations, the droplet spectrum typical of fogs was used. In particular, the droplet spectrum was taken from the observations presented in the article titled titled "The physics of radiation fog: I - a field study", by W.T. Roach, R. Brown, S. J. Caughey, J. A. Garland and C.J. Readings, published in *Ouart. J. Roy. Met. Soc.,* 1976, v. 102, p. 313-333.

As can be seen, the initial visibility (before seeding) in the fog equals 34 m. In the present calculations, the fog droplets were assumed to be charged at time of 0 seconds (t=0s). The magnitude of the charge, selected for the calculations, depends on the droplet size, and varies in the range of about $\pm 10^{-14}$ Coulomb for the droplets having 1 micron radius to about $\pm 10^{-12}$ Coulomb for the droplets having 20 micron radius, respectively.

In the case when 50% of the droplets within a certain volume of the fog are initially charged by one polarity charges, and another 50% of the droplets within the same volume are charged by the opposite polarity charges, the visibility in the fog increases from 34 m at the time t=0 s to 240 m at the time t=1800 s (see **Fig. 7**, curve **71**). As can be seen, a rather rapid increase in the fog visibility is observed during the first 5-10 seconds. For instance, the visibility increases from 34 m to 52 m over the first ten seconds (see curve **71** in the inset in **Fig. 7**).

In the case when 30% of the droplets are initially charged by one polarity charges and 30% of the droplets are charged by the opposite polarity charges, the visibility increases from 34 m to 43 m over the first 10 seconds, and then increases to 75 m by the time period of 1800 seconds (see **Fig. 7,** curves **72**). The calculations show that the visibility continues to increase also after 1800 seconds. That indicates that the collision processes in the selected fog volume, triggered by the seeding, still continue with the further decreasing of the droplet concentration.

The efficiency of the cloud seeding technique can be measured by the mass of precipitating raindrops produced by seeding the clouds, which initially contain only non-precipitating cloud droplets. For the purpose of the present calculations, the drops with radii exceeding 50 microns are referred to as raindrops and the droplets having the radii below 50 micron are referred to as non-precipitating cloud droplets. Since different clouds contain different amount of liquid water, the seeding efficiency is characterized by the ratio between the raindrop content (i.e., the mass of the raindrops per unit of volume) and the total cloud water content. This ratio hereinafter will be referred to as the relative rainwater content.

It should be appreciated by a person skilled in the art that in the case of a cloud that contains only non-precipitating cloud droplets, the relative rainwater content is equal to zero. On the other hand, when the cloud contains only precipitating raindrops, the relative rainwater content is equal to one.

**Fig. 8** illustrates four examples of the calculations of the time dependence of the relative rainwater content in a cloud. The results are obtained by solving the stochastic collection equation, similar to that used in the case of fog. A cloud droplet spectrum measured by Rosenfeld and Woodley in summertime Texas clouds on 13 August 1999 (see the paper titled *"Deep convective clouds with sustained highly supercooled liquid water until -37.5 °C"*, published in Nature, 2000, v. 405, p. 440-442) was selected as an example for the present calculations.

The clouds investigated by Rosenfeld *et al.* have a rather narrow droplet size distribution, centered at about 9 micron in radius, and do not produce rain (or produce negligible rain amount) under the natural conditions. A calculated curve **84** in **Fig. 8,** corresponding to the case when no charged seed elements are injected, nicely supports the experimental observations. Indeed, as can be seen, the relative rainwater content is constant and equal to zero. In other words, no raindrops are formed over the calculated period of time of 600 seconds.

A calculated curve **81** in **Fig. 8** corresponds to the case when 5% of the cloud droplets of the initial droplet size distribution within a certain cloud volume are charged by the same polarity charges. As was noted above, the maximum magnitude of the charge depends on the droplet size. For the purpose of the calculations, the magnitude of the charge, varies in the range of about $\pm 10^{-14}$ Coulomb for droplets having 1 micron radius to about $\pm 10^{-12}$ Coulomb for the droplets having 20 micron radius, respectively.

One can see that the charging of the cloud droplets leads to a relatively rapid rain formation. Thus, after injecting charged seed elements in a certain cloud volume, the relative rainwater content increases from zero (at time period of about t=300s) to 0.85 (at t=540s). These results show that 85% of the initial droplet mass transfers to the precipitating rain drops over a rather short period of time of about 250 seconds.

A calculated curve **82** in **Fig. 8** shows the rain formation in the case when 1% of the droplets in the initial droplet size distribution are charged by one polarity charges, while 4% of the droplets are charged by the opposite polarity charges. In turn, a calculated curve **83** illustrates the rain formation in the case when 2% of the cloud droplets in the initial droplet size distribution are charged by one polarity charges, while 3% of the droplets are charged by the opposite polarity charges. One can see that the seeding of clouds with the charged elements leads to a rather rapid rain formation.

It can be appreciated from the illustrated calculations that the cloud seeding with elements charged by the same polarity charges (curve **81**) produces more rain over the same period of time, as compared to the cases when seeding was carried out by the elements charged by opposite polarity charges (curves **82, 83**).

Thus, according to one non-limiting example of the invention, in order to obtain fast increase of visibility in fog, the seeding elements are charged by opposite polarity charges.

According to another non-limiting example of the invention, in order to obtain the maximum rain enhancement, the seeding elements are charged by the same polarity charges.

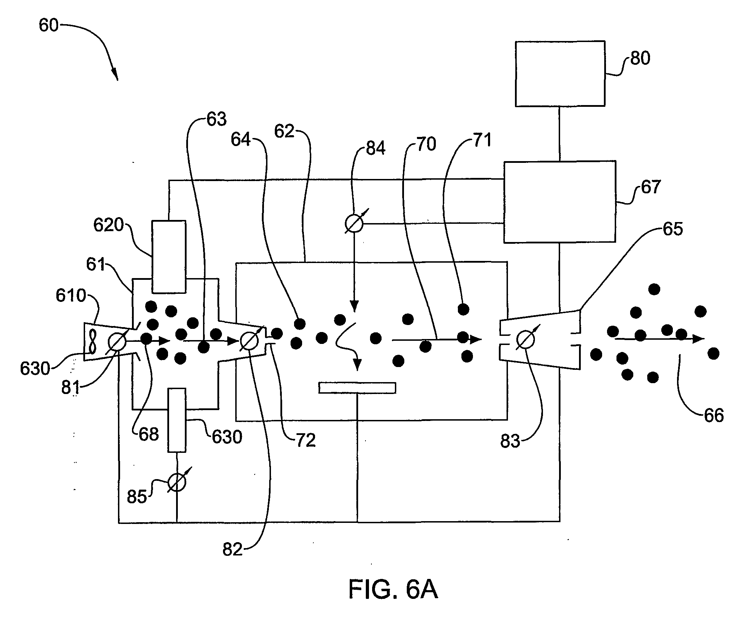

Referring now to **Fig 6A**, there is illustrated a schematic block diagram of an apparatus **60** for controlling atmospheric conditions in a portion 66 of the atmosphere, according to one embodiment of the present invention. It should be noted that the blocks in **Fig. 6A** are intended as functional entities only, such that the functional relationships between the entities are shown, rather than any physical connections and/or physical relationships.

The apparatus **60** includes a chamber **61** for providing an element flow stream **63,** a charger **62** coupled to the chamber **61** for charging the particles **64** in the element flow stream **63,** a seeder **65** for releasing a charged element flow stream **70** and controllably scattering charged particles **71** of the charged element flow stream **70** in the portion **66** of the atmosphere, and a control module **67** for controlling the operation of the apparatus **60.**

The chamber **61** of the apparatus includes a feeder **620** for allowing the introduction of raw material (not shown) into the chamber **61,** a mixer **610** for mixing an air flow stream **68** with a particulate material derived from the raw material and an outlet **72** for releasing an output obtained thereby to the charger **62.** The air flow stream **68** may be provided with a fan **630** arranged in the mixer **610.**

In order to control the operation of the apparatus, the control module **67** of the apparatus **60** is equipped with various conventional devices for indicating and regulating certain parameters such as the amount and kind of the raw material to be used, the strain of the air in the air flow stream **68,** the strain of the element flow stream **63,** the strain of the charged element flow stream **70,** the size, charge and concentration of the particles **71** in the charged element flow stream **70,** etc.

Accordingly, the control module of the apparatus can include a first strain regulator **81** arranged in the mixer **610** for producing a first sensor signal representative of the strain of the air in the air flow stream **68.** The control module **67** is responsive to the first sensor signal for controlling the strain. The control module **67** can also include a second strain regulator **82** arranged in the outlet **72** for producing a second sensor signal representative of the strain of the element flow stream. The control module is responsive to the second sensor signal for controlling the strain. Further, the module can also include a third strain regulator **83** arranged in the seeder **65** for producing a third sensor signal representative of the strain of the charged element flow stream **70.** The control module **67** is responsive to the third sensor signal for controlling the strain.

The control module **67** can include a charge regulator **84** coupled to the charger **62.** The regulator is responsive to a signal produced thereby for controlling the charge magnitude and/or polarity of the charged particles.

The apparatus **60** can also include a burner **630** coupled to the chamber **61** for burning the raw material so as to form the particulate material as a combustion product. In such a case, the control module **67** can include a temperature regulator **84** coupled to the burner **630.** The temperature regulator is responsive to a signal produced thereby for controlling the temperature in the burner **630.**

The apparatus receives electric power from an electrical power source **80** coupled to the chamber **61,** charger **62,** seeder **65** and their components for providing electrical power for operation of the apparatus.

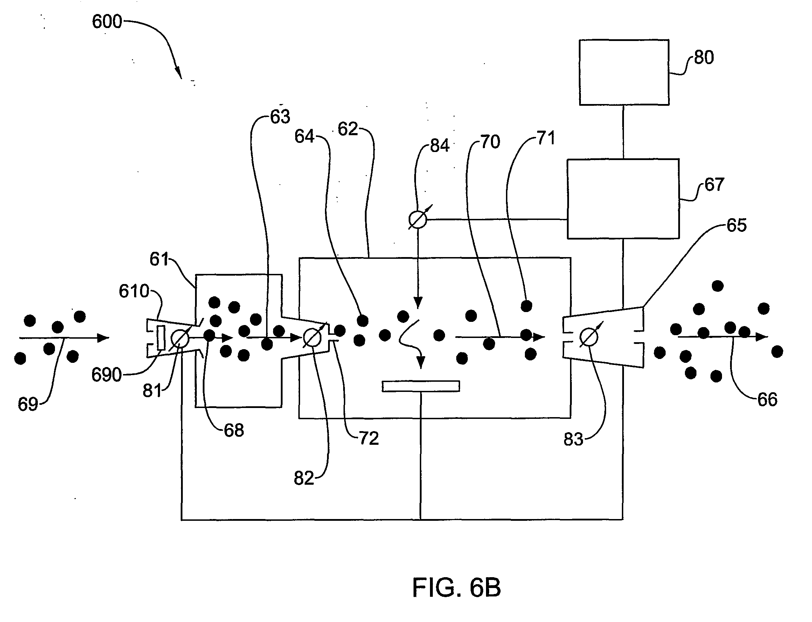

Referring to **Fig. 6B,** a schematic block diagram of an apparatus **600** for controlling atmospheric conditions in the atmosphere is illustrated, according to another embodiment of the invention. The apparatus **600** distinguishes from the apparatus **60** in that the chamber **61** does not include the feeder and the burner of the particulate material.

According to this embodiment of the invention, the air flow stream **68** is provided by an inlet **621.** The inlet **621** is fitted for receiving an input air flow stream **69** containing atmospheric water droplets and transferring this stream to the chamber **61,** thereby providing the air flow stream **680** containing the water droplets. The air flow stream **680** can be fed to the charger **62** coupled to the chamber **61** for charging the water droplets. The operation of all the other elements of the apparatus **600** is similar to those of the apparatus **60.**

The apparatus **600** can include a suction device **690,** such as a pump, arranged in the inlet **621** for the facilitation of the receiving of the input air flow stream **69.**

It should be appreciated by a person skilled in the art that the charged seeding material can contain the charged particles together with the charged atmospheric water droplets. In such a case, the apparatus of the present invention can include two chambers identified by reference numeral **61** in **Fig. 6A** and **Fig. 6B.** One of these chambers can provide the element flow stream containing particles of a particulate material, as described above with reference to **Fig. 6A,** while another chambers can provide the element flow stream containing atmospheric water droplets, as descried above with reference to **Fig. 6B.** The element flow stream provided by these two chambers can be fed to the charger **62,** and thereafter to the seeder **65,** as described above.

According to one embodiment of the invention, controlling the atmospheric conditions for the purpose of rain regulation by seeding electrically charged particles in clouds can be carried out by the apparatus that is mounted on a flying object, e.g., an airplane, helicopter or dirigible. For the controllable dispersal of fog or ground mist, the apparatus can be carried on a motorized vehicle. Likewise, the water droplets of fog can be treated by a low flying airplane controllably dispersing the electrically charged particles in accordance with the invention.

According to another embodiment of the invention, the control of the atmospheric conditions can be effected from a ground located source, e.g. from a chimney-stack. In this case, the charger, of the kind described above, can be mounted within the chimney-stack in order to charge the smoke particles ejected into the atmosphere when clouds or fog are in the vicinity of the chimney-stack. The controllable scattering of the charged smoke particles not only affects the atmospheric conditions, but can also scavenge the atmosphere from the ejected materials.

Use of the method and apparatus according to the invention may result in a higher precipitation of rain than hitherto-proposed techniques.

As such, those skilled in the art to which the present invention pertains, can appreciate that while the present invention has been described in terms of preferred embodiments, the concept upon which this disclosure is based may readily be utilized as a basis for the designing of other structures, systems and processes for carrying out the several purposes of the present invention.

It is apparent that although the examples based on the numerical experiments were shown for interaction between the neutral drop and electrically charged droplets (particles), the method of the present invention can be applied for controlling the collision rate between the charged drops and neutral droplets (particles), or charged drops and charged droplets (particles).

Moreover, any reference to a specific implementation in terms of usage of the chamber, the charger, the control module, or any other components are shown by way of a non-limiting example.

Also, it is to be understood that the phraseology and terminology employed herein are for the purpose of description and should not be regarded as limiting.

It is important, therefore, that the scope of the invention is not construed as being limited by the illustrative embodiments set forth herein. Other variations are possible within the scope of the present invention as defmed in the appended claims.

**Claims**

**1.** A method of controlling atmospheric conditions in a portion of the atmosphere containing microscopic water droplets dispersed therein so as to produce their desired coalescence and precipitation, the method includes:

(a) providing a predetermined amount of a seeding material having uncharged seeding elements of a predetermined size distribution;
(b) calculating a predetermined polarity and charge magnitude of seeding elements by using a collision model describing collisions between said charged seeding elements and said microscopic water droplets;
(c) electrically charging the uncharged seeding elements so as to produce charged seeding elements having said predetermined polarity and charge magnitude, and
(d) seeding said charged seeding elements in said portion of the atmosphere.

**2.** A method as claimed in claim 1 wherein said portion of the atmosphere is a portion of cloud, and, preferably, wherein said seeding elements are charged with the same polarity charges.

**3.** A method as claimed in claim 1 wherein said portion of the atmosphere is a portion of fog and, preferably, wherein said seeding elements are charged with opposite polarity charges.

**4.** A method as claimed in claim 1 wherein said droplets are

(a) substantially electrically neutral; or

(b) electrically charged.

5. A method as claimed in claim 1 wherein the calculating of the polarity and charge magnitude of the seeding elements by using a collision model takes into account said size distribution of the water droplets in said portion of the atmosphere.

6. A method as claimed in claim 1 wherein said seeding material includes particles of a particulate material.

7. A method as claimed in claim 1 wherein said seeding material includes atmospheric water droplets.

8. A method as claimed in claim 6 wherein the providing of the particulate material includes burning a pyrotechnic material.

9. A method as claimed in claim 6 wherein the particles are soot particles.

10. A method as claimed in claim 6 wherein the particulate material is a powdered solid material.

11. A method as claimed in claim 1 wherein said seeding elements have a spread of sizes ranging from sub-micron to several micron sizes and, preferably, wherein the size of said seeding elements ranges from 0.0001mm - 0.02mm (0.1 micron to 20 microns).

12. A method as claimed in claim 1 wherein the charge magnitude of the charged seeding elements ranges from about $\pm 10^{-16}$ Coulomb to about $\pm 10^{-12}$ Coulomb.

13. A method as claimed in claim 1 wherein the electrically charging of the seeding elements comprising passing the particles through an electric discharge of a predetermined discharge characteristic and, preferably, wherein said electric discharge is corona discharge.

14. A method as claimed in claim 1 wherein an effective collision rate in said collision model is proportional at least to a collision efficiency and a concentration of the droplets and, preferably, wherein said collision efficiency

    (a) has a value higher than 1; or
    (b) ranges from 0.001 to 100.

15. A method as claimed in claim 1 wherein the controlling of the atmospheric conditions is effected from a flying object

16. A method as claimed in claim 1 wherein the controlling of the atmospheric conditions is effected from a ground located source and, preferably, wherein the ground located source is a chimney stack.

17. An apparatus for controlling atmospheric conditions in a portion of the atmosphere (**66**) containing microscopic water droplets dispersed therein by carrying out the method of claim 1, the apparatus comprising:

    a chamber (**61**) for providing an element flow stream of a seeding material containing uncharged seeding elements having a predetermined size;
    a charger (**62**) downstream of the chamber (**61**) and in communication therewith for charging said uncharged seeding elements in said element flow stream so as to produce charged seeding elements having a predetermined polarity and charge magnitude;
    a seeder (**65**) for controllable scattering said charged seeding elements in said portion of the atmosphere;
    a control module (**67**) for controlling operation of the apparatus; and
    an electrical power source (**80**) for providing electrical power required for operation of the apparatus.

18. An apparatus as claimed in claim 17 wherein said seeding material includes particles of a particulate material; and, preferably, wherein the particulate material is a powder.

19. An apparatus as claimed in claim 17 wherein said seeding material includes atmospheric water droplets.

20. An apparatus as claimed in claim 18 wherein the chamber comprises:

a feeder (**620**) for allowing introduction of a raw material of a required kind in a required amount,
a mixer (**610**) for mixing an air flow stream with a predetermined amount of the particulate material derived from said raw material, thereby producing said element flow stream,
an outlet (**72**) for releasing said element flow stream.

21. An apparatus as claimed in claim 18 further comprising a fan for providing said air flow stream; and, preferably, wherein said fan for providing said air flow stream is arranged in the mixer (**61**).

22. An apparatus as claimed in claim 18 further comprising a burner (**630**) coupled to the chamber for burning said raw material so as to form the particulate material as a combustion product; and, preferably, wherein said combustion product is soot particles.

23. An apparatus as claimed in claim 17 wherein said portion of the atmosphere (**66**) is

   (a) a portion of cloud; or
   (b) a portion of fog.

24. An apparatus as claimed in claim 17 wherein said droplets are substantially electrically neutral.

25. An apparatus as claimed in claim 17 wherein the seeding elements have a spread of sizes ranging from sub-micron to several micron sizes.

26. An apparatus as claimed in claim 17 wherein the value of the charge of the seeding elements ranges from about $\pm 10^{-16}$ Coulomb to about $\pm 10^{-12}$ Coulomb.

27. An apparatus as claimed in claim 17 wherein said chamber includes an inlet (**621**) for receiving an input air flow stream from atmosphere and transferring the input air flow stream to the chamber (**61**) thereby providing said air flow stream and, preferably, further including a suction device (**690**) arranged in said inlet (**621**).

28. An apparatus as claimed in claim 17 wherein the charger comprises at least a pair of electrodes for producing

   (a) an electric field; or
   (b) an electric discharge.

29. An apparatus as claimed in claim 27 wherein said control module includes a first strain regulator (**81**) arranged in the inlet (**621**) for producing a first sensor signal representative of a strain of the air in the air flow stream (**68**), the control module being responsive to said first sensor signal for controlling the strain.

30. An apparatus as claimed in claim 17 wherein said control module (**67**) includes

   (a) a second strain regulator (**82**) arranged in the outlet (**72**) for producing a second sensor signal representative of a strain of the element flow stream (**63**), the control module (**67**) being responsive to said second sensor signal for controlling the strain; or
   (b) a third strain regulator (**83**) arranged in the seeder (**65**) for producing a third sensor signal representative of a strain of the charged element flow stream (**70**), the control module (**67**) being responsive to said third sensor signal for controlling the strain; or
   (c) a temperature regulator (**85**) arranged in the chamber (**61**) and is responsive to a signal produced thereby for controlling temperature in the burner (**630**); or
   (d) a charge regulator (**84**) arranged in the charger (**62**) and is responsive to a signal produced thereby for controlling the charge magnitude and/or polarity of the charged particles.

31. An apparatus as claimed in claim 17 for use with a flying object.

32. An apparatus as claimed in claim 17 for use with a ground located source, which is, preferably, a chimney-stalk.

**Patentansprüche**

1. Verfahren zur Steuerung atmosphärischer Bedingungen in einem Teil der Atmosphäre, welcher in demselben dispergierte mikroskopische Wassertröpfchen enthält, um deren erwünschte Koaleszenz und Niederschlag zu erzeugen, dieses Verfahren umfasst Folgendes:

   (a) Beschaffen einer vorgegebenen Menge eines Impfmaterials, welches nicht geladene Impfelemente mit einer vorgegebenen Größenverteilung hat;
   (b) Berechnen einer vorgegebenen Polarität und Ladungsgröße von Impfelementen anhand eines Kollisionsmodells, welches Kollisionen zwischen den geladenen Impfelementen und den mikroskopischen Wassertröpfchen beschreibt;
   (c) elektrisches Laden der nicht geladenen Impfelemente zwecks Erzeugung geladener Impfelemente, welche die vorgegebene Polarität und Ladungsgröße aufweisen, und
   (d) Impfen der geladenen Impfelemente in den Teil der Atmosphäre.

2. Verfahren nach Anspruch 1, wobei der Teil der Atmosphäre ein Teil einer Wolke ist, und wobei die Impfelemente vorzugsweise mit Ladungen gleicher Polarität geladen werden.

3. Verfahren nach Anspruch 1, wobei der Teil der Atmosphäre ein Teil eines Nebels ist und wobei die Impfelemente vorzugsweise mit Ladungen entgegengesetzter Polarität geladen werden.

4. Verfahren nach Anspruch 1, wobei die Tröpfchen

   (a) im wesentlichen elektrisch neutral sind; oder
   (b) elektrisch geladen sind.

5. Verfahren nach Anspruch 1, wobei bei der Berechnung der Polarität und Ladungsgröße der Impfelemente anhand eines Kollisionsmodells die Größenverteilung der Wassertröpfchen in dem Teil der Atmosphäre berücksichtigt wird.

6. Verfahren nach Anspruch 1, wobei das Impfmaterial Partikel eines partikelförmigen Materials enthält.

7. Verfahren nach Anspruch 1, wobei das Impfmaterial atmosphärische Wassertröpfchen enthält.

8. Verfahren nach Anspruch 6, wobei das Beschaffen des partikelförmigen Materials das Abbrennen eines pyrotechnischen Materials einschließt.

9. Verfahren nach Anspruch 6, wobei die Partikel Rußpartikel sind.

10. Verfahren nach Anspruch 6, wobei das partikelförmige Material ein pulverisierter Feststoff ist.

11. Verfahren nach Anspruch 1, wobei die Impfelemente eine Größenstreuung aufweisen, welche von Submikron-Größen bis zu Größen von mehreren Mikron reicht und wobei die Größe der Impfelemente vorzugsweise in einem Bereich von 0.0001 mm - 0.02 mm (0.1 Mikron bis 20 Mikron) liegt.

12. Verfahren nach Anspruch 1, wobei die Ladungsgröße der geladenen Impfelemente in einem Bereich von ungefähr $\pm 10^{-16}$ Coulomb bis ungefähr $\pm 10^{-12}$ Coulomb liegt.

13. Verfahren nach Anspruch 1, wobei das elektrische Laden der Impfelemente umfasst, dass die Partikel eine elektrische Entladung mit einem vorgegebenen Entladungsmerkmal durchqueren, und wobei die elektrische Entladung vorzugsweise eine Koronaentladung ist.

14. Verfahren nach Anspruch 1, wobei eine effektive Kollisionsrate in dem Kollisionsmodell wenigstens zu einer Kollisionseffzienz und einer Konzentration der Tröpfchen proportional ist und wobei die Kollisionseffizienz vorzugsweise

   (a) einen Wert größer als 1 besitzt; oder
   (b) in einem Bereich von 0.001 bis 100 liegt.

**15.** Verfahren nach Anspruch 1, wobei die Steuerung der atmosphärischen Bedingungen von einem Flugobjekt aus erfolgt.

**16.** Verfahren nach Anspruch 1, wobei die Steuerung der atmosphärischen Bedingungen von einer auf dem Boden befindlichen Quelle aus erfolgt und wobei die auf dem Boden befindliche Quelle vorzugsweise ein Schornstein ist.

**17.** Vorrichtung zur Steuerung atmosphärischer Bedingungen in einem Teil der Atmosphäre (66), welcher in demselben dispergierte mikroskopische Wassertröpfchen enthält, durch Ausführung des Verfahrens aus Anspruch 1, wobei die Vorrichtung Folgendes umfasst:

eine Kammer (61) zur Bereitstellung eines Impfelementstroms eines Impfmaterials, welches nicht geladene Impfelemente mit einer vorgegebenen Größe enthält;
ein der Kammer (61) nachgeordnetes und mit derselben in Verbindung stehendes Ladegerät (62) zum Laden der nicht geladenen Impfelemente in dem Impfelementstrom, um geladene Impfelemente mit einer vorgegebenen Polarität und Ladungsgröße zu erzeugen;
ein Impfgerät (65) zum regulierbaren Verstreuen der geladenen Impfelemente in dem Teil der Atmosphäre;
ein Steuermodul (67) zum Steuern des Betriebs der Vorrichtung; und
eine elektrische Energiequelle (80) zum Bereitstellen von für einen Betrieb der Vorrichtung erforderlicher elektrischer Energie.

**18.** Vorrichtung nach Anspruch 17, wobei das Impfmaterial Partikel eines partikelförmigen Materials enthält; und wobei das partikelförmige Material vorzugsweise ein Pulver isL

**19.** Vorrichtung nach Anspruch 17, wobei das Impfmaterial atmosphärische Wassertröpfchen enthält.

**20.** Vorrichtung nach Anspruch 18, wobei die Kammer Folgendes umfasst:

eine Zuführvorrichtung (620), um eine Eingabe eines Rohmaterials einer erforderlichen Art in einer notwendigen Menge zu gestatten,
einen Mischer (610), um einen Luftstrom mit einer vorgegebenen Menge des partikelförmigen Materials, welches von dem Rohmaterial abgeleitet ist, zu mischen, und **dadurch** den Impfelementstrom zu erzeugen,
einen Auslass (72), um den Impfelementstrom freizusetzen.

**21.** Vorrichtung nach Anspruch 18, welche weiterhin ein Gebläse zur Bildung des Luftstroms aufweist; und wobei das Gebläse zur Bildung des Luftstroms vorzugsweise in dem Mischer (61) angeordnet ist.

**22.** Vorrichtung nach Anspruch 18, welche weiterhin einen Brenner (630) aufweist, welcher an die Kammer zwecks Verbrennung des Rohmaterials gekoppelt ist, um das partikelförmige Material als ein Verbrennungsprodukt zu bilden; und wobei es sich bei dem Verbrennungsprodukt vorzugsweise um Rußpartikel handelt.

**23.** Vorrichtung nach Anspruch 17, wobei der Teil der Atmosphäre (66)

(a) ein Teil einer Wolke ist; oder
(b) ein Teil eines Nebels ist.

**24.** Vorrichtung nach Anspruch 17, wobei die Tröpfchen im wesentlichen elektrisch neutral sind.

**25.** Vorrichtung nach Anspruch 17, wobei die Impfelemente eine Größenstreuung aufweisen, welche von Submikron-Größen bis zu Größen von mehreren Mikron reicht.

**26.** Vorrichtung nach Anspruch 17, wobei der Wert der Ladung der Impfelemente in einem Bereich von ungefähr $\pm 10^{-16}$ Coulomb bis ungefähr $\pm 10^{-12}$ Coulomb liegt.

**27.** Vorrichtung nach Anspruch 17, wobei die Kammer einen Einlass (621) zum Aufnehmen eines Eingangsluftstroms aus der Atmosphäre und Weiterleiten des Eingangsluftstroms zu der Kammer (61) umfasst und **dadurch** den Luftstrom bereitstellt, und vorzugsweise weiterhin eine in dem Einlass (621) angeordnete Saugvorrichtung (690) enthält.

**28.** Vorrichtung nach Anspruch 17, wobei das Ladegerät mindestens ein Paar Elektroden umfasst zwecks Erzeugung

    (a) eines elektrischen Feldes; oder
    (b) einer elektrischen Entladung.

**29.** Vorrichtung nach Anspruch 27, wobei das Steuermodul einen in dem Einlass (621) angeordneten ersten Belastungsregler (81) zur Erzeugung eines ersten Sensorsignals enthält, das repräsentativ für eine Belastung der Luft in dem Luftstrom (68) ist, wobei das Steuermodul auf das erste Sensorsignal zur Kontrolle der Belastung reagiert.

**30.** Vorrichtung nach Anspruch 17, wobei das Steuermodul (67) umfasst

    (a) einen in dem Auslass (72) angeordneten zweiten Belastungsregler (82) zur Erzeugung eines zweiten Sensorsignals, das repräsentativ für eine Belastung des Impfelementstroms (63) ist, wobei das Steuermodul (67) auf das zweite Sensorsignal zur Kontrolle der Belastung reagiert; oder
    (b) einen in dem Impfgerät (65) angeordneten dritten Belastungsregler (83) zur Erzeugung eines dritten Sensorsignals, das repräsentativ für eine Belastung des geladenen Impfelementstroms (70) ist, wobei das Steuermodul (67) auf das dritte Sensorsignal zur Kontrolle der Belastung reagiert; oder
    (c) einen Temperaturregler (85), welcher in der Kammer (61) angeordnet ist und auf ein **dadurch** erzeugtes Signal zur Kontrolle der Temperatur in dem Brenner (630) reagiert; oder
    (d) einen Ladungsregler (84), welcher in dem Ladegerät (62) angeordnet ist und auf ein **dadurch** erzeugtes Signal zur Kontrolle der Ladungsgröße und/oder Polarität der geladenen Partikel reagiert.

**31.** Vorrichtung nach Anspruch 17 zur Verwendung mit einem Flugobjekt.

**32.** Vorrichtung nach Anspruch 17 zur Verwendung mit einer auf dem Boden befindlichen Quelle, welche vorzugsweise ein Schornstein ist.

## Revendications

**1.** Un procédé de contrôle des conditions atmosphériques dans une partie de l'atmosphère contenant des gouttelettes d'eau microscopiques dispersées en dedans afin de produire leur coalescence et précipitation désirées, le procédé consistant à:

    (a) fournir une quantité prédéterminée d'un matériau d'ensemencement ayant des éléments d'ensemencement non chargés d'une granulométrie prédéterminée;
    (b) calculer une polarité prédéterminée et une amplitude de charge d'éléments d'ensemencement en utilisant un modèle de collision décrivant les collisions entre lesdits éléments d'ensemencement chargés et lesdites gouttelettes d'eau microscopiques;
    (c) charger électriquement les éléments d'ensemencement non chargés afin de produire des éléments d'ensemencement chargés ayant lesdites polarité prédéterminée et amplitude de charge, et
    (d) ensemencer lesdits éléments d'ensemencement chargés dans ladite partie de l'atmosphère.

**2.** Un procédé selon la revendication 1 dans lequel ladite partie de l'atmosphère est une partie de nuage, et, de préférence, dans lequel lesdits éléments d'ensemencement sont chargés avec les mêmes charges de polarité.

**3.** Un procédé selon la revendication 1 dans lequel ladite partie de l'atmosphère est une partie de brouillard, et, de préférence, dans lequel lesdits éléments d'ensemencement sont chargés avec des charges de polarité opposées.

**4.** Un procédé selon la revendication 1 dans lequel lesdites gouttelettes sont

    (a) essentiellement électriquement neutres; ou
    (b) électriquement chargées.

**5.** Un procédé selon la revendication 1 dans lequel le calcul de la polarité et de l'amplitude de charge des éléments d'ensemencement en utilisant un modèle de collision tient compte de ladite granulométrie des gouttelettes d'eau dans ladite partie de l'atmosphère.

**6.** Un procédé selon la revendication 1 dans lequel ledit matériau d'ensemencement inclut des particules d'un matériau particulaire.

**7.** Un procédé selon la revendication 1 dans lequel ledit matériau d'ensemencement inclut des gouttelettes d'eau atmosphériques.

**8.** Un procédé selon la revendication 6 dans lequel la fourniture du matériau particulaire inclut la combustion d'un matériau pyrotechnique.

**9.** Un procédé selon la revendication 6 dans lequel les particules sont des particules de suie.

**10.** Un procédé selon la revendication 6 dans lequel le matériau particulaire est un matériau solide en poudre.

**11.** Un procédé selon la revendication 1 dans lequel lesdits éléments d'ensemencement ont un écart de taille variant de tailles submicroniques à plusieurs microns et, de préférence, dans lequel la taille desdits éléments d'ensemencement varie de 0,00001 millimètres à 0,02 millimètres (0,1 microns à 20 microns).

**12.** Un procédé selon la revendication 1 dans lequel l'amplitude de charge des éléments d'ensemencement chargés varie d'environ $\pm 10^{-16}$ coulombs à environ $\pm 10^{-12}$ coulombs.

**13.** Un procédé selon la revendication 1 dans lequel le chargement électrique des éléments d'ensemencement consistant à passer les particules à travers une décharge électrique de caractéristique de décharge prédéterminée et, de préférence, dans lequel ladite décharge électrique est une décharge couronne.

**14.** Un procédé selon la revendication 1 dans lequel un taux de collision efficace dans ledit modèle de collision est proportionnel au moins à une efficacité de collision et à une concentration des gouttelettes et, de préférence, dans lequel ladite efficacité de collision

    (a) a une valeur supérieure à 1 ; ou
    (b) varie de 0,001 à 100.

**15.** Un procédé selon la revendication 1 dans lequel le contrôle des conditions atmosphériques est effectué à partir d'un objet volant.

**16.** Un procédé selon la revendication 1 dans lequel le contrôle des conditions atmosphériques est effectué à partir d'une source localisée au sol et, de préférence, dans lequel la source localisée au sol est une souche de cheminée.

**17.** Un appareil pour contrôler les conditions atmosphériques dans une partie de l'atmosphère **(66)** contenant des gouttelettes d'eau microscopiques dispersées en dedans en mettant en oeuvre le procédé de la revendication 1, l'appareil comportant
    une chambre **(61)** pour fournir un courant de flux d'éléments d'un matériau d'ensemencement contenant les éléments d'ensemencement non chargés ayant une taille prédéterminée
    un chargeur **(62)** en aval de la chambre **(61)** et en communication avec celui-ci pour charger lesdits éléments non chargés dans ledit courant de flux d'éléments afin de produire des éléments d'ensemencement chargés ayant une polarité prédéterminée et une amplitude de charge;
    un épandeur **(65)** pour la dispersion contrôlable desdits éléments d'ensemencement chargés dans ladite partie de l'atmosphère;
    un module de contrôle **(67)** pour contrôler l'opération de l'appareil; et
    une source d'alimentation électrique **(80)** pour fournir l'alimentation électrique requise pour le fonctionnement de l'appareil.

**18.** Un appareil selon la revendication 17 dans lequel ledit matériau d'ensemencement inclut des particules d'un matériau particulaire; et, de préférence, dans lequel le matériau particulaire est une poudre.

**19.** Un procédé selon la revendication 17 dans lequel ledit matériau d'ensemencement inclut des gouttelettes d'eau atmosphériques.

**20.** Un appareil selon la revendication 18 dans lequel la chambre comporte:

un dispositif d'alimentation **(620)** pour permettre l'introduction d'un matériau brut d'une sorte requise dans une quantité requise,

un mélangeur **(610)** pour mélanger un courant de flux d'air à une quantité prédéterminée du matériau particulaire dérivé dudit matériau brut, produisant de ce fait ledit courant de flux d'éléments,

une sortie **(72)** pour libérer ledit courant de flux d'éléments.

21. Un appareil selon la revendication 18 comportant en outre un ventilateur pour fournir ledit courant de flux d'air; et, de préférence, dans lequel ledit ventilateur pour fournir ledit courant de flux d'air est arrangé dans le mélangeur (61).

22. Un appareil selon la revendication 18 comportant en outre un brûleur **(630)** couplé à la chambre pour brûler ledit matériau brut afin de former le matériau particulaire comme produit de combustion; et, de préférence, dans lequel ledit produit de combustion est des particules de suie.

23. Un appareil selon la revendication 17 dans lequel ladite partie de l'atmosphère **(66)** est

(a) une partie de nuage ; ou
(b) une partie de brouillard.

24. Un appareil selon la revendication 17 dans lequel lesdites gouttelettes sont essentiellement électriquement neutres.

25. Un appareil selon la revendication 17 dans lequel les éléments d'ensemencement ont un écart de taille variant de tailles submicroniques à plusieurs microns.

26. Un appareil selon la revendication 17 dans lequel l'amplitude de charge des éléments d'ensemencement varie d'environ $\pm 10^{-16}$ coulombs à environ $\pm 10^{-12}$ coulombs.

27. Un appareil selon la revendication 17 dans lequel ladite chambre inclut une admission (**621**) pour recevoir une entrée de courant de flux d'air à partir de l'atmosphère et transférer l'entrée de courant de flux d'air à la chambre (**61**) fournissant de ce fait ledit courant de flux d'air et, de préférence, comprenant en outre un dispositif d'aspiration (**690**) disposé dans ladite admission (**621**).

28. Un appareil selon la revendication 17 dans lequel le chargeur comporte au moins une paire d'électrodes pour produire

(a) un champ électrique; ou
(b) une décharge électrique.

29. Un appareil selon la revendication 27 dans lequel ledit module de contrôle inclut un premier régulateur de contrainte (**81**) disposé dans l'admission (**621**) pour produire un premier signal de capteur représentatif d'une contrainte de l'air dans le courant de flux d'air (**68**), le module de contrôle étant sensible audit premier signal de capteur pour contrôler la contrainte.

30. Un appareil selon la revendication 17 dans lequel ledit module de contrôle (**67**) inclut

(a) un deuxième régulateur de contrainte (**82**) disposé dans la sortie (**72**) pour produire un deuxième signal de capteur représentatif d'une contrainte du courant de flux d'éléments (**63**), le module de contrôle (67) étant sensible audit deuxième signal de capteur pour contrôler la contrainte; ou
(b) un troisième régulateur de contrainte (**83**) disposé dans l'épandeur (**65**) pour produire un troisième signal de capteur représentatif d'une contrainte du courant de flux d'éléments chargés (**70**), le module de contrôle (**67**) étant sensible audit troisième signal de capteur pour contrôler la contrainte; ou
(c) un régulateur de température (**85**) disposé dans la chambre (**61**) et est sensible à un signal produit de ce fait pour contrôler la température dans le brûleur (**630**); ou
(d) un régulateur de charge (**84**) disposé dans le chargeur (**62**) et est sensible à un signal produit de ce fait pour contrôler l'amplitude de charge et/ou la polarité des particules chargées.

31. Un appareil selon la revendication 17 pour l'usage avec un objet volant.

32. Un appareil selon la revendication 17 pour l'usage avec une source localisée au sol, qui est, de préférence, une souche de cheminée.

FIG. 1

FIG. 2

FIG. 3

FIG. 4

FIG. 5

FIG. 6A

FIG. 6B

EP 1 467 611 B1

FIG. 7

FIG. 8